# EUROPEAN PATENT SPECIFICATION

(11) **EP 2 165 237 B1**
(45) Date of publication and mention of the grant of the patent: **01.12.2010**
(21) Application number: 08762839.2
(22) Date of filing: 12.06.2008
(51) Int. Cl.: G02F 1/01, C03B 37/012, C03B 37/026, C03B 37/027

(54) **PHOTONIC CRYSTAL ELECTROOPTIC FIBER AND METHOD FOR MANUFACTURING SUCH A FIBER**
ELEKTROOPTISCHE FASER MIT PHOTONISCHEM KRISTALL UND VERFAHREN ZUR HERSTELLUNG EINER SOLCHEN FASER
FIBRE À CRISTAUX PHOTONIQUES ÉLECTRO-OPTIQUES ET SON PROCÉDÉ DE FABRICATION

(30) Priority: 15.06.2007 RU 2007122610
(43) Date of publication of application: 24.03.2010
(73) Proprietor: Research And Technological Institute Of Optical Materials Science (RTIOMS), St.-Petersburg 192171 (RU)
(72) Inventor: ANAN'EV, Anatolii Vladimorovich, Saint Petersburg, 192071 (RU); ZHELTOV, Valerii Borisovich, Saint Petersburg, 194265 (RU); IVANOV, Vladimir Nikolaevich, Saint Petersburg, 193232 (RU); LIPOVSKII, Andrey Aleksandrovich, Saint Petersburg 194021 (RU); POLUKHIN, Vladimir Nikolaevich, Saint Petersburg, 196211 (RU); TAGANTSEV, Dmitry Kirillovich, Saint Petersburg, 191028 (RU); TATARINTSEV, Boris Vasil'evich, Saint Petersburg, 195298 (RU); BARTELT, Hartmut, 07751 Jena-Kunitz (DE); KOBELKE, Jens, 07751 Munchenroda (DE)
(74) Representative: Office Freylinger
(86) International application number: PCT/IB2008/001506
(87) International publication number: WO 2008/152479

(56) References cited:
- RU-C2- 2 247 414
- US-A- 5 768 462
- US-A1- 2006 104 582
- US-B1- 6 243 522

## Description

### FIELD OF THE INVENTION

The present invention relates to optical and electronic industry, and more particularly, to fiber-optical elements with photonic band gaps demonstrating electrooptical phenomenon and may be used to design information transmitting and processing systems.

### BACKGROUND OF THE INVENTION

In the recent decade the investigation of influence of electric field on alteration of optical properties (there are primarily refractive index, birefringence, dispersion, polarization) of such materials as glasses, crystals, and polymers is being carried out very intensively all over the world.

In the case of isotropic materials the electrically induced birefringence caused by electrooptical Kerr effect follows formula Δ*n* = *nₑ* - *n*₀ = λ· *B*· *E*² , where λ, is the wavelength, *E* is the electric field in V/m, *n*ₑ and *n*₀ are indices in directions parallel and perpendicular to electric field, correspondingly, and *B* is the Kerr coefficient.

In anisotropic materials without centre of symmetry, the induced birefrigerence is determined by linear electrooptic Pockels effect where Δ*n* is proportional to *E*. Linear electrooptic Pockels effect is sufficiently more effective than the quadratic Kerr effect.

Optical glass fiber is of great interest as an electrooptic device when used in information transmitting and processing systems, switches and others. Efforts are underway, both to increase Kerr coefficient of glasses, to develop technology of manufacturing electrooptical fibers with the Kerr effect, and to modify electrooptical fiber targeted on transfer from the quadratic electrooptic Kerr effect to the linear electrooptic Pockels effect.

One of the manners to realize the transfer mentioned above in a glass is polarization of structural elements of glass occurring in process of thermal treatment of a glass in electric field (poling).

Rather intensive studies are conducted, aimed at the elaboration of photonic-crystal fiber, i.e. the optical fiber in which the waveguiding effect is due to photonic band gaps in directions perpendicular to the fiber axis. One type of photonic crystal fibers is an optical fiber with Bragg structure of a cladding. In such a fiber it is possible to realize single mode propagation of light.

One of the advantages of Bragg fiber, as compared to a single mode fiber with total internal reflection, is a significantly larger surface of the cross-section of guided light beam and, consequently, higher intensity and lower power density of light flux. Another advantage is the possibility of optical dispersion controlling.

Photonic crystal fibers with Bragg structure are well-known, e.g. from US 6,243,522. The fibers are made from silicate glasses containing germanium, boron, titanium oxides and fluorides. They are characterized by low Kerr coefficient and cannot be used in electrooptical devices.

Glasses with Kerr coefficient exceeding that of silica glass by more than 20 times are well-known. (See, for example, glasses described in the paper by N.F.Borelli et al. "Electric-field induced birefringence properties of high-refractive index glasses exhibiting large Kerr nonlinearities". J. App. Phys. 70 (5), 01.09.1991). However, to produce an electrooptic fiber, the usage of a glass with high Kerr coefficient is insufficient. It is necessary to use a glass with technological parameters ensuring the drawing of an optical fiber free of defects. The glasses mentioned above do not show the needed combination of these properties.

According to US 5,768,462, an optical fiber is manufactured from a silica glass. Grooves are made on the outer surface of fiber going along it. Electrodes are hidden in these grooves. Electric voltage is applied to the electrodes that results in the change of refractive parameters of the fiber. A gold wire of 25 µm in diameter is used as an electrode. Such optical fiber modifies the transmitted optical signal due to the alteration of refractive parameters induced by the electric voltage applied to the electrodes. Conventional technology of fiber drawing (drawing from a rod) is used. First of all, a rod with grooves along generatrix is made, and then the rod is heated in a microwave furnace up to the melting temperature. After that, a fiber is drawn with and wound onto a spool. Gold wire electrodes are placed in the grooves all along the fiber.

Disadvantages of the solution described above are as follows: firstly, the material of fiber, that is a silica based glass, has extremely low Kerr coefficient; secondly, it is very difficult to put electrodes of 25 µm in diameter in the grooved long fiber of 200 µm thickness; thirdly, the effective application of driving electric field to an active light guiding core is hardly possible. It is caused by long distance between electrodes and the core and low value of the Kerr coefficient leading to necessitating usage of high voltages and in its turn to electric damage.

The technique of manufacturing a single mode polymer electrooptical fiber is described in the paper of D. J. Welker et al. "Fabrication and characterization of single-mode electro-optic polymer optical fiber", Optics Letters, vol.23, n°23, December 1, 1998. Cladding is made of polymethilmetacrilat (PMMA), the core is produced from PMMA doped with scattering red nitro dye, indium is used for electrodes. First of all, a preform from two semi-cylinders is made. Core and electrodes are placed in the grooves. The semi-cylinders are assembled to make a preform of 12.7 mm in diameter and 100 mm long. The preform is used to draw a fiber of 125 µm in diameter, 10 µm core, and 1 km in length. However, this technology does not give a fiber with homogeneous transmission and resistance because of the high mutual diffusion of polymer components in the hot zone of drawing. As a result, it is possible to make only short pieces of the fiber suitable for measurements.

US 6,598,428 discloses a method for manufacturing solid glass (without holey channels) photonic crystal fibers from multicomponent glasses. This fiber cannot be considered to be electrooptic because it does not contain electrodes and it is not intended for the modulation of optical signal by applied electric voltage.

The closest prior art to the proposed solution is a single mode electrooptic fiber and the method of its manufacturing disclosed in RU 2 247 414. According to this patent application, the electrooptic fiber is made from multicomponent glasses with high Kerr coefficient. The method of its manufacturing lies in the fact that a bundle of glass rods is used for assembling a package with simultaneous forming of the internal structure of future electrooptic fiber including a core, claddings, light absorbing elements and conductive electrodes. The package is drawn to produce a preform, which should then be redrawn to produce a fiber with simultaneous coating of it with a polymer protective coating.

The electrooptic fiber mentioned above is not a photonic crystal fiber because transmission of light through the optical fiber is due to the effect of total internal reflection but not due to the existence of photonic band gaps. Disadvantages of this fiber are the low intensity of transmitted light beam because of a small area of cross-section of guided light beam and high optical dispersion.

### OBJECTIVE OF THE INVENTION

This invention is targeted at providing the opportunity of increasing light flux in optical fiber, enhancement of electrooptical effect, and/or creation of the possibility to control optical dispersion in the fiber.

### SUMMARY OF THE INVENTION

The objective of the invention is achieved through forming a novel fiber structure based on the concept of Bragg structure, formed from multicomponent glasses with high Kerr coefficient and adjacent electrodes located in the glass envelope of the Bragg structure. A method of manufacturing of the proposed photonic crystal fiber ensures the achievement of the object of the invention and allows to produce fibers of various predesigned variants related to the form and mutual arrangement of constituent elements of the fiber.

The proposed photonic crystal electrooptic fiber and the method of its manufacturing represent a group of inventions joined by a common inventive concept.

Contrary to the prior art, the photonic crystal electrooptic fiber, which includes constituent elements made of multicomponent glasses with high Kerr coefficient and embedded electrodes located along the fiber axis, has Bragg structure in the central part that includes a homogeneous core made of low refractive glass and a pre-designed bundle of alternating claddings made of high refractive and low refractive glasses. A peripheral part of the fiber forms a soft envelope of the Bragg structure and is manufactured from multicomponent glasses with low viscosity in the fiber drawing temperature range. Embedded metallic electrodes are adjacent to the central part, on the diametrically opposed sides. The elements of Bragg structure preferably have a predesigned form of cross-section.

Core and claddings of the Bragg structure are preferably made of a glass with a Kerr coefficient not less than 5·10⁻¹⁶ *m*/*V*² containing the following components (in weight %): SiO₂ (7-25%), B₂O₃ (6-15%), La₂O₃ (14-30%), BaO (21-35%), TiO₂ (12-15%), ZrO₂ (1-6%), WO₃ (0.7-2%), Nb₂O₅ (2.5-11%) and at least one component from the As₂O₃, Sb₂O₃ group in amounts of 0.1-0.5%. These glasses ensure the highest electrooptical effect.

From these glasses, the high refractive claddings of Bragg structure can be made. In this case, core and low refractive claddings may be produced from glasses containing the following components (in weight %): SiO₂ (50-75%), at least one component from the B₂O₃, Al₂O₃ group in amounts of B₂O₃ (1-25%), Al₂O₃ (1-10%), at least one of components from the K₂O, Na₂O, Li₂O group in amounts of K₂O (1-12%), Na₂O (2-20%), Li₂O (1-5%), at least one component from the BaO, CaO, MgO group in amounts of BaO, CaO (0.5-6%), MgO (0.5-4%) and at least one component from the A_{S2}O₃, Sb₂O₃ group in amounts of 0.1-0.5%. Such combination of glasses promotes the increase in the difference between indices of claddings and ensures the possibility of doping a core with rare earth ions Er₂O₃, Yb₂O₃, Nd₂O₃, Y₂O₃ (0.01-3%), Tb₂O₃ (0.01-1.5%) and a gain in optical signal due to laser effect that was confirmed experimentally.

For achievement of a better compatibility of thermomechanical parameters of glasses in the fiber and increasing Kerr coefficient, the glasses can additionally contain, at least one from the components (in weight %): SrO, CaO (0.5-2%), Ta₂O₅ (2.5-11 %).

To decrease extra aperture light flux in fiber, the glass of the outer high refractive cladding or the outer high refractive cladding and the adjacent outer low refractive cladding of the Bragg structure can contain at least one component from the CoO, Cr₂O₃, Mn₂O₃ group in amounts of (in weight %): CoO, Cr₂O₃ (0.1-0.5%), Mn₂O₃ (0.01-2%). These claddings are light absorbing and the outer low refractive cladding is made of a glass with low viscosity in the fiber drawing temperature range.

To maintain polarization of propagating light, the cross-section of claddings of the Bragg structure perpendicular to fiber axis can have hexagonal form, elongated in the direction of one of diagonals, while electrodes are located in such a way that the line connecting the electrode pair forms an indirect angle with this diagonal.

To enhance electrical polarization of core glass of the Bragg structure, the high refractive cladding can be made discontinuous, i.e. insertions made of low refractive glass can be embedded into the high refractive claddings; this leads to good electrooptical Pockels effect. In other words, the high refractive cladding is a discontinuous layer of high refractive glass filled with low refractive glass.

To gain a signal in fiber, the glass of low refractive core can be doped with rare earth oxides in amounts of (weight %): Er₂O₃, Yb₂O₃, Nd₂O₃, Y₂O₃ (0.01-3%), Tb₂O₃ (0.01-1.5%) that ensures laser effect.

To simplify the technology of the drawing of electrodes in a glass envelope and redrawing of a secondary package, the electrodes can be made from tin or lead tin alloy.

To change the direction and increase electrical polarization of glass and to control parameters of photonic band gaps and light transmittance of the optical fiber, the fiber can contain two pairs of electrodes, arranged adjacent to the Bragg structure and arranged at an angle to each other, while electrodes of each pair are adjacent to the Bragg structure on the diametrically opposite structure sides of the structure.

The central part of the photonic crystal electrooptical fiber can be formed by a set of Bragg structures with adjacent pairs of electrodes located in a common soft fiber envelope.

To produce photonic crystal electrooptical fiber, a method is claimed including the steps of manufacturing initial separate rods from core and cladding glass bars, drawing rods of equal dimensions and forms from them, bundling package of elements of fiber with electrodes, drawing preform from the package and drawing fiber from it. Contrary to the prior art, the rods are initially drawn from bars made of a low refractive glass for core and low refractive cladding and from bars made of high refractive glass for high refractive cladding. Then, one or several packages with hexagonal cross-section are assembled from the rods in such a way that the central part of each light guide forms a Bragg structure, wherein the layers of high refractive and low refractive glass rods are adjacent to a core made of low refractive glass. The outer layer of the Bragg structure is formed from rods made of a glass with low viscosity in fiber drawing temperature range. Then, each bundled package is drawn to form a rod with Bragg structure, while electrodes formed from metal filled glass tubes are drawn to form electrode rods, i.e. metal filled capillaries. Then, a secondary package built from one or several rods with Bragg structure and one or several pairs of electrodes in accordance with the pre-designed parameters of specific kind of the bundle is assembled such that, in the central part of the package, there should be located rods with Bragg structure, surrounded with one or several rows of rods made of glass with low viscosity in fiber drawing temperature range to form a soft envelope of the fiber, wherein diametrically opposite electrodes are arranged in pairs close to the Bragg structure. Then, the secondary package is re-drawn to a form a preform and then finally the photonic crystal electrooptic fiber.

Practical realization of the proposed method of manufacturing photonic crystal electrooptic fibers is e.g. possible in the following way: rods of equal diameters or double apothems, for example 0.5-5 mm are drawn from bars of circular or hexagonal cross-section made of glasses for a core and claddings. From these rods, there is assembled a package with hexagonal cross-section with double apothem, for example, 10-50 mm and 400-600 mm length, which form the internal, central part of the future light guide (Bragg structure and envelope, that is soft envelope of Bragg structure made of glass with low viscosity in the temperature range of glass softening).

Then, the rods with internal Bragg structure are drawn from the assembled package. Electrodes in the form of metal-filled capillaries are drawn from metal filled tubes. Then, the secondary package is assembled in accordance with the pre-designed parameters of concrete bundle of the rods with Bragg structure, electrodes, initial rods made of core and/or cladding glasses. To make it, one or several rods with Bragg structure are located in the central part of the package. Furthermore, there are rods from glasses for core and/or claddings of Bragg structure surrounding the rod or several rods with Bragg structure and electrodes in one or several rows while the electrodes are close to the rod with Bragg structure on diametrically opposite sides. Then, the secondary package is redrawn to form a preform, and then, finally, the photonic crystal electrooptic fiber of 50-300 µm in diameter.

An advantage of the proposed method lies in the fact that, at the stage of package assembling, it is possible to ensure any form of the core and claddings and any mutual arrangement of Bragg structure and electrodes that is very difficult to realize by well-known methods. It is purposeful to apply electric voltage to one pair of electrodes in the process of re-drawing of the secondary package the voltage being of order of several tens volts.

### BRIEF DESCRIPTION OF THE DRAWINGS

The invention is described, by way of example, by the following accompanying figures.
Fig.1 schematically shows a cross-section of a package bundled from rods of circular cross-section intended for drawing a rod with Bragg structure. The package comprises a number of different rods, wherein rods of the core (1) are surrounded by rods of high refractive cladding (2), rods of low refractive cladding (3), and rods of high refractive light absorbing glass (4). A soft envelope of the Bragg structure is formed by rods of outer low refractive cladding (5).
Fig.2 shows the cross-section of the rod drawn from the package shown in Fig.1.
Fig.3 shows the cross-section of a secondary package comprising a rod with Bragg structure (6), rods of soft envelope (7) made of glass with low viscosity in fiber drawing temperature range and electrodes (8) of a first pair and of a second pair.
Fig.4 schematically shows the cross-section of a rod with Bragg structure, the claddings of which have hexagonal form elongated in the direction of one of the diagonals. High refractive claddings can be discontinuous and contain low refractive glass insertions. Fig.4 shows a core (9), the elements of which are made from low refractive glass; elements (10) of high refractive glass; elements (11) made from low refractive glass; insertions (12) made from high light absorbing glass in peripheral envelope; and a soft envelope (13).
Fig.5 shows the cross-section of a photonic crystal fiber containing six light guides with Bragg structure (6), electrodes (8), and a soft envelope (7).

### DESCRIPTION OF SOME EXAMPLES

**Table 1: Percentage of oxides in compositions of core and cladding glasses**

| Component | Percentage of components in weight % | | | Component | Percentage of components in weight % | |
|---|---|---|---|---|---|---|
| | Glass as in claim 2 | Glass as in claim 3 | Glass as in claim 4 | | Glass as in claim 6 | Glass as in claim 7 |
| SiO₂ | 7-25 | 7-25 | 7-25 | SiO₂ | 50-75 | 50-75 |
| B₂O₃ | 6-15 | 6-15 | 6-15 | B₂O₃ | 1-25 | 1-25 |
| La₂O₃ | 14-30 | 14-30 | 14-30 | and/or | | |
| BaO | 21-35 | 21-35 | 21-35 | Al₂O₃ | 1-10 | 1-10 |
| TiO₂ | 12-15 | 12-15 | 12-15 | K₂O | 1-12 | 1-12 |
| ZrO₂ | 1-6 | 1-6 | 1-6 | and/or | | |
| WO₃ | 0.7-2 | 0.7-2 | 0.7-2 | Na₂O | 2-20 | 2-20 |
| Nb₂O₅ | 2.5-11 | 2.5-11 | 2.5-11 | and/or | | |
| AS₂O₃ | 0.1-0.5 | 0.1-0.5 | 0.1-0.5 | Li₂O₃ | 1-5 | 1-5 |
| and/or | | | | BaO | 0.5-6 | 0.5-6 |
| Sb₂O₃ | 0.1-0.5 | 0.1-0.5 | 0.1-0.5 | and/or | | |
| Ta₂O₅ | : | 2.5-11 | - | CaO | 0.5-6 | 0.5-6 |
| nd/or | | | | and/or | | |
| SrO | - | 0.5-2 | - | MgO | 0.5-4 | 0.5-4 |
| and/or | | | | AS₂O3 | 0.1-0.5 | 0.1-0.5 |
| CaO | - | 0.5-2 | - | and/or | | |
| and/or | | | | Sb₂O₃ | 0.1-0.5 | 0.1-0.5 |
| CoO | - | - | 0.01-0.5 | Er₂O₃ | - | 0.01-3 |
| and/or | | | | and/or | | |
| Cr₂O₃ | - | - | 0.01-0.5 | Yb₂O₃ | - | 0.01-3 |
| and/or | | | | and/or | | |
| Mn₂O₃ | - | - | 0.01-2 | Y₂O₃ | - | 0.01-3 |
| | | | | and/or | | |
| | | | | Nd₂O₃ | | 0.01-3 |
| | | | | and/or | | |
| | | | | Tb₂O₃ | | 0.01-1.5 |

Examples of practical glass compositions under the invention are shown in Tables 2, 3, 4.

All glasses were fitted in their thermal expansion coefficients.

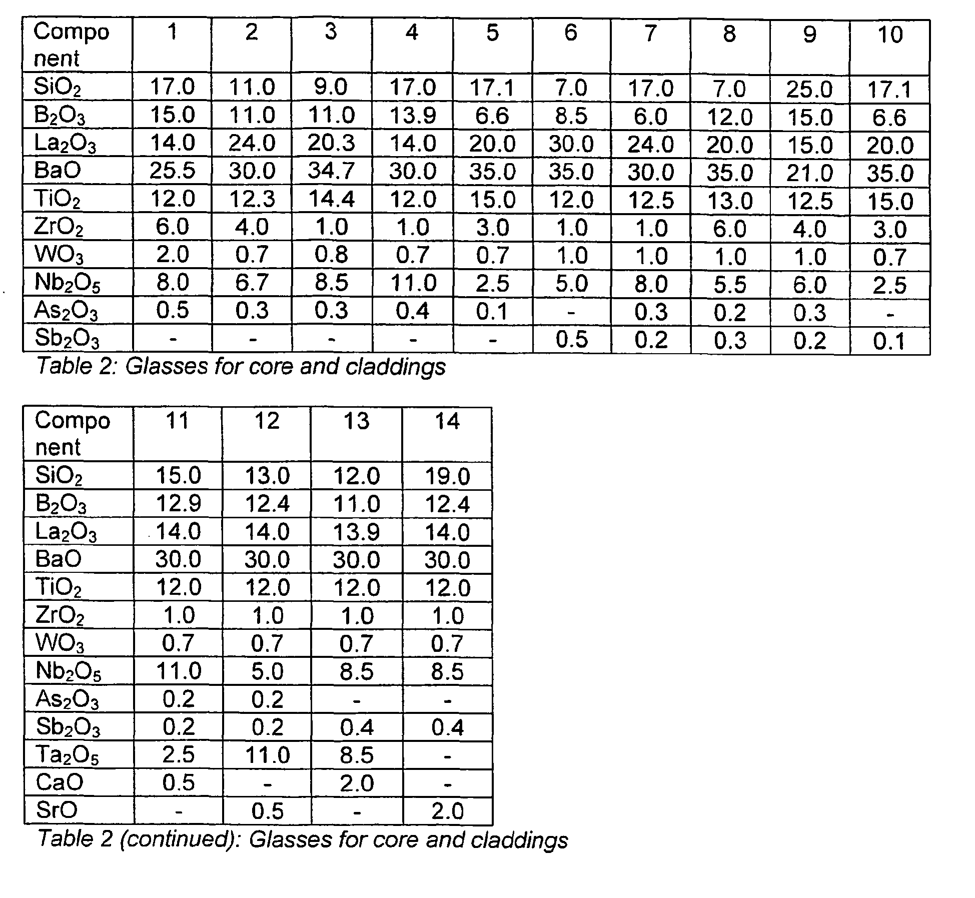

**Table 3: Glasses for core and claddings**

| Component | 1 | 2 | 3 | 4 | 5 | 6 | 7 | 8 | 9 |
|---|---|---|---|---|---|---|---|---|---|
| SiO₂ | 17.0 | 11.0 | 9.0 | 17.0 | 17.0 | 7.0 | 17.0 | 7.0 | 25.0 |
| B₂O₃ | 15.0 | 11.0 | 11.0 | 13.9 | 6.6 | 8.0 | 6.0 | 12.0 | 15.0 |
| La₂O₃ | 14.0 | 24.0 | 20.3 | 14.0 | 20.0 | 30.0 | 24.0 | 20.0 | 14.0 |
| BaO | 25.0 | 30.0 | 34.6 | 30.37 | 35.0 | 35.0 | 30.0 | 35.0 | 21.0 |
| TiO₂ | 12.0 | 12.3 | 14.4 | 12.0 | 15.0 | 12.0 | 12.0 | 13.0 | 12.0 |
| ZrO₂ | 6.0 | 4.0 | 1.0 | 1.0 | 2.99 | 1.0 | 1.0 | 6.0 | 3.4 |
| WO₃ | 2.0 | 0.7 | 0.8 | 0.7 | 0.7 | 1.0 | 1.0 | 1.0 | 1.0 |
| Nb₂O₃ | 8.0 | 6.7 | 8.5 | 11.0 | 2.5 | 3.5 | 8.0 | 5.5 | 6.0 |
| AS₂O₃ | 0.5 | 0.3 | 0.3 | - | 0.1 | - | 0.5 | 0.3 | - |
| Sb₂O₃ | 0.5 | - | - | - | 0.1 | - | - | 0.2 | - |
| CoO | - | - | 0.1 | 0.01 | 0.01 | - | 0.5 | 0.1 | 0.1 |
| Cr₂O₃ | - | - | - | 0.01 | - | 0.5 | - | - | 0.5 |
| Mn₂O₃ | - | - | - | 0.01 | - | 2.0 | - | - | 2.0 |

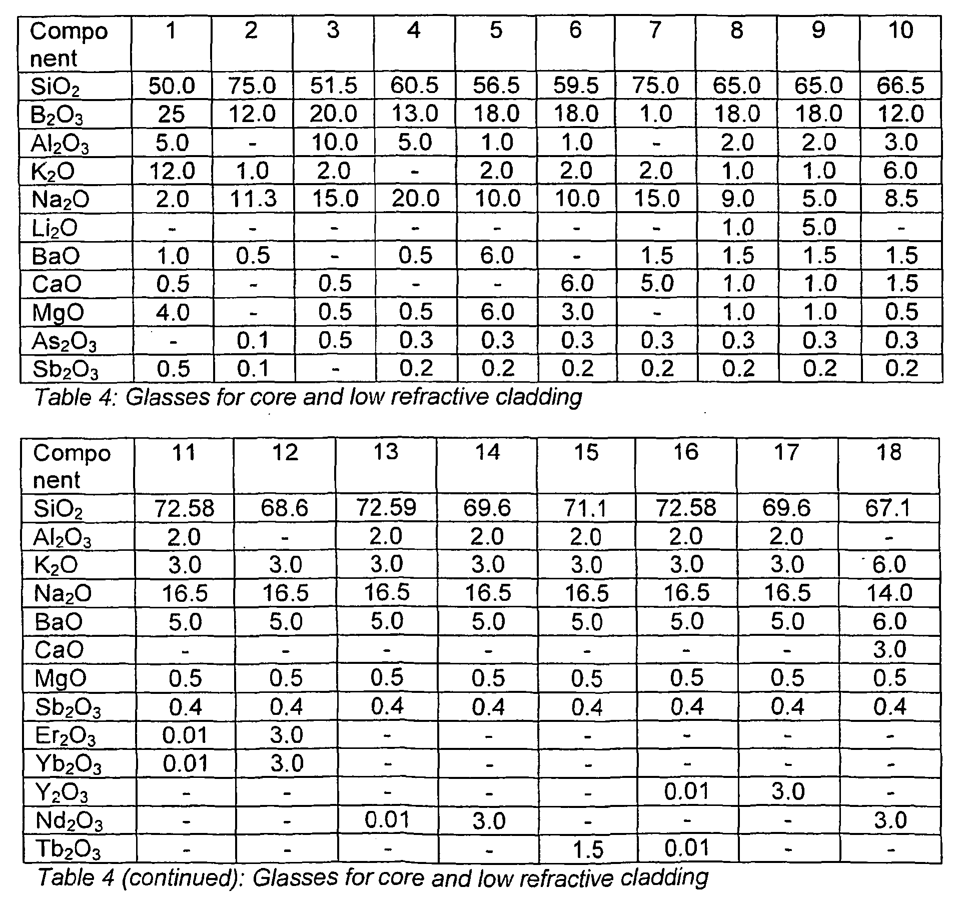

The technical essence of the invention related to the method is illustrated by the following examples:

### Example 1:

191 rods for core and low refractive claddings were drawn from bars of circular section made of the glass N°9 (Table 2) with index 1.75. 148 rods for high refractive claddings were drawn from the glass N°2 (Table 2) with index 1.86. 67 rods were drawn from the light absorbing glass N°3 (Table 3). 163 rods of circular section 1.18 mm in diameter were drawn from the glass N°10 (Table 4). From a lead filled tube made of the glass N°10, the lead filled capillaries with an outer diameter of 1.18 mm were drawn.

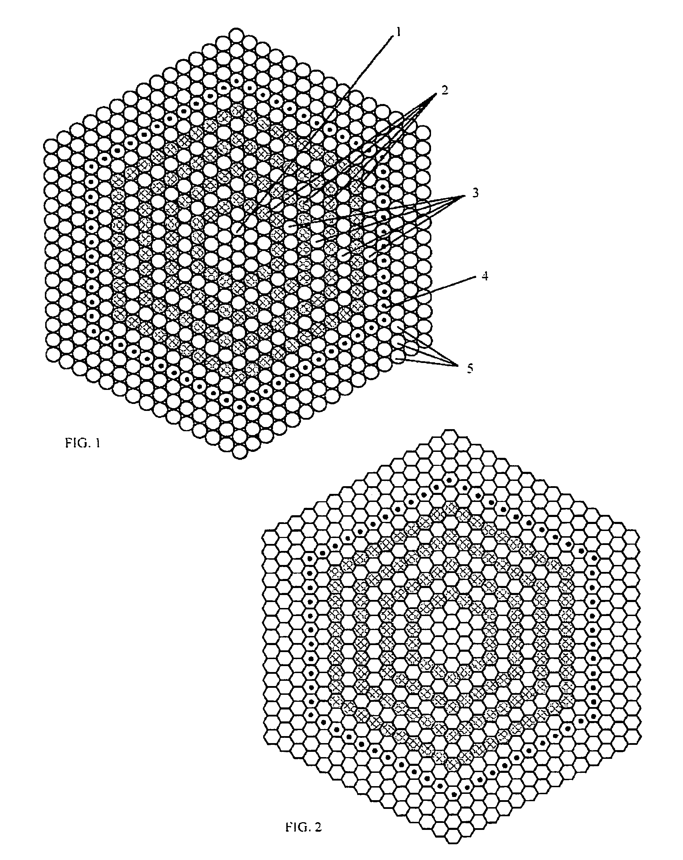

From the manufactured rods, a hexagonal package of double apothem 30 mm and 400 mm long was assembled. A Bragg structure with soft outer protective envelope was formed. A cross-section of this package is schematically shown in Fig.1. The core (1) and low refractive claddings (3) were formed from the glass N°9 (Table 2), high refractive claddings (2) from the glass N°2 (Table 2), light absorbing cladding (4) from the glass N°3 (Table 3), protective envelope (5) from the glass N°10 (Table 4).

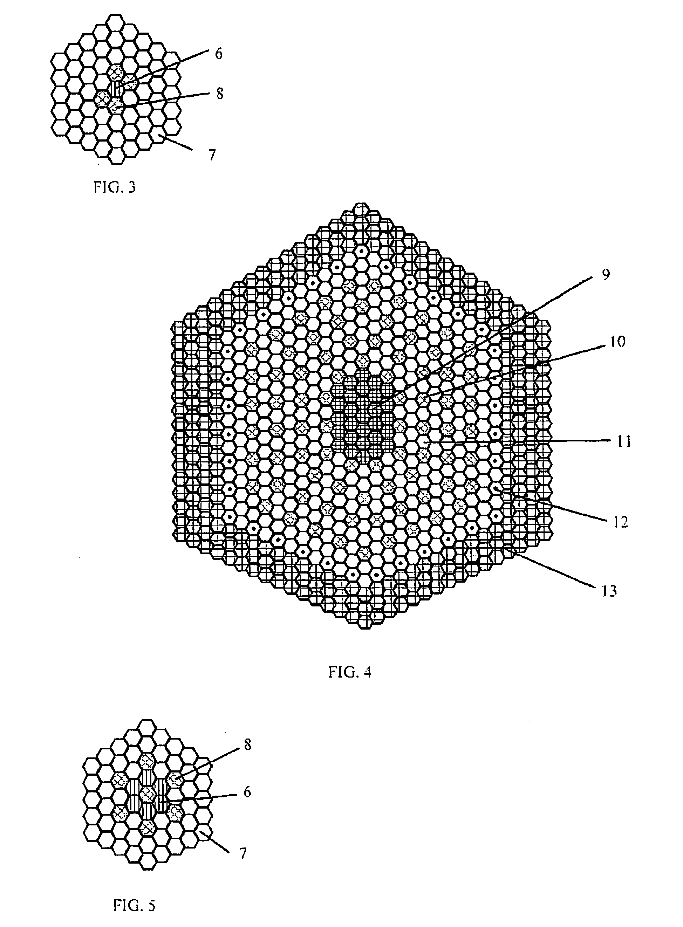

The package was re-drawn into a rod with Bragg structure (6) of double apothem 1.18 mm, the cross-section of which is shown in Fig.2. Then, a secondary hexagonal package of 9.5 mm double apothem was drawn from the rod with Bragg structure (6), and also from rods (7) made of the glass N°10 (Table 4), and electrode capillaries (8). Then, this package was re-drawn into a preform, the cross-section of which is shown in Fig.3, and then, finally, into a photonic crystal electrooptic fiber with a diameter of 100-200 µm.

### Example 2:

The rods of circular section 1.10 mm in diameter were drawn from bars of circular section made from the glass N°2 (Table 2) with index 1.86, the glass N°10 (Table 4) with index 1.52, and the glass N°3 (Table 3). Lead filled capillaries of 1.10 mm outer diameter were drawn from the lead filled tube made of the glass N°10 (Table 4). From these rods a package of 30 mm double apothem and 400 mm long was produced. Bragg structure supplied with a soft protective envelope was formed in the package.

The core (1) and low refractive (3) and protective envelope (5) were bundled from the glass N°10 (Table 4), and the light absorbing cladding (4) from the glass N°3 (Table 3). The package was re-drawn into a hexagonal rod of double apothem 1.10 mm the cross-section of which is shown in Fig.4. Then, the secondary package of double apothem 8.7 mm was assembled from the produced rods, initial rods of circular section made of the glass N°10 (Table 4) and electrode capillaries were assembled. This package was re-drawn into several preforms of double apothem 3-4 mm, after which the preforms were re-drawn into a photonic crystal electrooptic fiber of 100-300 µm in diameter, 30-60V electric voltage being applied to one of the electrode pairs at the process of drawing.

A study of the manufactured fibers showed that the square of cross-section of the propagating mode exceeded the square of cross-section of the modes propagating in the prototype fiber by more than 10 times, which ensured the possibility of the same increase of the transmitted light flux. High electrooptic effect of the novel fiber was evidenced by the depth of phase modulation in the drawn fiber, which was found comparable to the typical one for the prototype fiber at equal applied electric fields but for a fiber 10 times longer.

## Claims

1. An electrooptic photonic crystal fiber including its constituent elements made of multicomponent glasses wherein the fiber has
a central part forming a Bragg structure, the central part comprising a core (1) made homogeneously from low refractive glass and pre-designed set of alternating claddings made of high refractive (2) and low refractive glasses (3);
a peripheral part forming an envelope of the Bragg structure, the peripheral part being formed from multicomponent glasses with low viscosity in the fiber drawing temperature range; and
metallic electrodes located along the fiber axis, embedded in the peripheral part adjacent to the central part on diametrically opposite sides, and
an outer polymer protective envelope
wherein the glasses have high Kerr coefficient.

2. The fiber as claimed in claim 1, wherein the elements of Bragg structure have predesigned cross-section.

3. The fiber as claimed in claim 1 or 2, wherein and the core, the low refractive claddings and the high refractive claddings are made of glasses containing components (in weight %): SiO₂ (7-25%), B2O₃ (6-15%), La₂O₃ (1.4-30%), BaO (21-35%), TiO₂ (12-15%), ZrO₂ (1-6%), WO₃ (0-7-2%). Nb₂O₅ (2.5-11 %) and at least one component from the group As₂O₃, Sb₂O₃ in amounts of 0.1-0.5%.

4. The fiber as claimed in any of claims 1 or 2, wherein
the high refractive claddings are made of glasses containing components (in weight %): SiO₂ (7-25%), B₂O₃ (6-15%). La₂O₃ (14-30%), BaO (21-35%), TiO₂ (12-15%), ZrO₂ (1-6%), WO₃ (0.7-2%), Nb₂O₅ (2.5-11%) and at least one component from the group As₂O₃, Sb₂O₃ in amounts of 0.1-0.5%; and
the core and low refractive claddings are made of glasses containing the following components (in weight %): SiO₂ (50-75%), at least one of components from the B₂O₃, Al₂O₃ group in amounts of B₂O₃ (1-25%), Al₂O₃ (1-10%), at least one of components from the K₂O, Na₂O, Li₂O group in amounts of K₂O (1-12%), Na₂O (2-20%), Li₂O (1-5%), at least one component from the BaO, CaO, MgO group in amounts of (weight %) BaO, CaO (0.5-6%), MgO (0-5-4%) and at least one component from the As₂O₃, Sb₂O₃ group in amounts of 0.1-0.5 weight %.

5. The fiber as claimed in any of claims 1 to 4, wherein the core and/or claddings additionally contain at least one component (in weight %); SrO, CaO (0.5-2%), Ta₂O₅ (2.5-11%).

6. The fiber as claimed in any of claims 1 to 5, wherein the glass of the outer low refractive cladding of the Bragg structure and/or the glass of the outer high refractive cladding of the Bragg structure additionally contain at least one component from the CoO, Cr₂O₃, Mn₂O₃ group (in weight %) CoO, Cr₂O₃ (0.1-0.5%), Mn₂O₃ (0-01-2%).

7. The fiber as claimed in any of claims 1 to 6, wherein the Bragg structure claddings have a cross-section perpendicular to the fiber axis in the from of hexagon elongated in the direction of one of the diagonals, while the electrodes are located so that the line connecting the electrode pairs forms an indirect angle with this diagonal.

8. The fiber as claimed in any of the previous claims, wherein the high refractive claddings are discontinuous and contain insertions made of low refractive glass.

9. The fiber as claimed in any of the previous claims, wherein the glass of Bragg structure core additionally contains at least one of the following components in weight %: Er₂O₃, Yob₂O₃, Nd₂O₃, Y₂O₃ (0.0-396), Tb₂O₃ (0.01-1.5%).

10. The fiber as claimed in any of the previous claims, wherein conductive electrodes are made of tin.

11. The fiber as claimed in any of the previous claims, wherein conductive electrodes are made of tin lead alloy.

12. the fiber as claimed in any of the previous claims, wherein it contains two pairs of conductive electrodes while electrodes of each pair are adjacent to the Bragg structure on diametrically opposite sides and planes going through central axes of electrodes of each electrode pair form pre-designed angle with each other.

13. The fiber as claimed in any of the previous claims, wherein the glasses have a Kerr coefficient not less than 5·10⁻¹⁶ *m*/*V²*

14. A method for manufacturing a photonic crystal electrooptical fiber including:
manufacturing initial separate rods from the bars made of core and cladding glasses,
drawing from them rods of equal dimensions and form,
bundling a package of elements of a fiber with electrodes from the rods,
drawing the preform from the package and drawing the fiber **characterized in that**
the initial rods are drawn from core and cladding bars made of low refractive glass and cladding bars made of high refractive glass, from which one or several package of hexagonal section are bundled, wherein a central part forms a Bragg structure in which low refractive and high refractive glass layers formed by the rods are alternatively adjacent to a low refractive glass core and wherein a peripheral part forms a envelope for the Bragg structure,
the peripheral part being formed by rods made from glasses with low viscosity in the glass softening temperature range,
the bundled package is drawn to form a rod with Bragg structure,
electrode rods are drawn from metal-filled glass tubes,
a secondary package is formed and consists of one or several rods with Bragg structure and one or several electrode pairs in accordance with the pre-designed parameters of specific kind of the bundle, wherein the rods with Bragg structure are located in a central part of the secondary package surrounded by one or several rows of rods made of glass with low viscosity in the fiber drawing temperature range to form soft envelope of the fiber while the electrodes close to Bragg structure are arranged in pairs which are diametrically opposed,
the secondary package is re-drawn to form a preform, and then, finally, a photonic crystal electrooptical fiber.

15. The method as claimed in claim 14, wherein at the process of re-drawing, an electrical voltage of several tenths volts is applied to the secondary package through one of the electrodes pairs.

## Patentansprüche

1. Elektrooptische Faser mit photonischem Kristall, einschließlich ihrer Elementarbestandteile, aus Mehrkomponentengläsern, wobei die Faser aufweist
einen Mittelteil, der eine Bragg-Struktur bildet, wobei der Mittelteil einen Kern (1), der homogen aus einem Glas mit niedrigem Brechungsindex gefertigt ist, und einen vorgestalteten Satz von Mänteln abwechselnd aus Gläsern mit hohem Brechungsindex (2) und Gläsern mit niedrigem Brechungsindex (3) aufweist;
einen Umfangsteil, der eine Hülle für die Bragg-Struktur bildet, wobei der Umfangsteil aus Mehrkomponentengläsern mit einer niedrigen Viskosität im Temperaturbereich des Faserziehens gebildet ist; und Metallelektroden, die entlang der Faserachse angeordnet sind und in dem Umfangsteil angrenzend an den Mittelteil auf sich diametral gegenüberliegenden Seiten eingebettet sind, und eine äußere Polymer-Schutzhülle,wobei die Gläser einen hohen Kerr-Koeffizienten aufweisen.

2. Faser nach Anspruch 1, wobei die Elemente der Bragg-Struktur einen vorgestalteten Querschnitt aufweisen

3. Faser nach Anspruch 1 oder 2, wobei der Kern, die Mäntel mit niedrigem Brechungsindex und die Mäntel mit hohem Brechungsindex aus Gläsern gefertigt sind, die die folgenden Komponenten (in Gew.-%) enthalten: SiO₂ (7-25%), B₂O₃ (6-15%), La₂O₃ (14-30%), BaO (21-35%), TiO₂ (12-15%), ZrO₂ (1-6%), WO₃ (0,7-2%), Nb₂O₅ (2,5-11%) und mindestens eine Komponente aus der Gruppe As₂O₃, Sb₂O, in Mengen von 0,1-0,5%

4. Faser nach einem der Ansprüche 1 oder 2, wobei die Mäntel mit hohem Brechungsindex aus Gläsern gefertigt sind, die die folgenden Komponenten (in Gew-%) enthalten: SiO₂ (7-25%), B₂O₃ (6-15%), La₂O, (14-30%), BaO (21-35%), TiO₂ (12-15%), ZrO₂ (1-6%), WO₃ (0,7-2%), Nb₂O₅ (2,5-11%) und mindestens eine Komponente aus der Gruppe As₂O₃, Sb₂O₃ in Mengen von 0,1-0,5%; und der Kern und die Mäntel mit niedrigem Brechungsindex aus Gläsern gefertigt sind, die die folgenden Komponenten (in Gew.-%) enthalten: SiO₂ (50-75%), mindestens eine Komponente der Gruppe B₂O₃, Al₂O₃ in Mengen von B₂O₃ (1-25%), Al₂O₃ (1-10%), mindestens eine der Komponenten der Gruppe K₂O, Na₂O, Li₂O in Mengen von K₂O (1-12%), Na₂O (2-20%), Li₂O (1-5%), mindestens eine Komponente der Gruppe BaO, CaO, MgO in Mengen von (Gew-%) BaO, CaO (0,5-6%), MgO (0,5-4%) und mindestens eine Komponente der Gruppe As₂O₃, Sb₂O₃ in Mengen von 0,1-0,5 Gew-%

5. Faser nach einem der Ansprüche 1 bis 4, wobei der Kern und/oder die Mäntel zusätzlich mindestens eine der folgenden Komponenten (in Gew-%) enthalten: SrO, CaO (0,5-2%), Ta₂O₅ (2,5-11%)

6. Faser nach einem der Ansprüche 1 bis 5, wobei das Glas des äußeren Mantels mit niedrigem Brechungsindex der Bragg-Struktur und/oder das Glas des äußeren Mantels mit hohem Brechungsindex der Bragg-Struktur zusätzlich mindestens eine Komponente der Gruppe CoO, Cr₂O₃, Mn₂O₃ (in Gew-%) CoO, Cr₂O₃ (0,1-0,5%), Mn₂O₃ (0,01-2%) enthält.

7. Faser nach einem der Ansprüche 1 bis 6, wobei die Bragg-Struktur-Mäntel einen Querschnitt senkrecht zur Faserachse in Form eines Hexagons aufweisen, das in Richtung einer der Diagonalen verlängert ist, während die Elektroden so angeordnet sind, dass die die Elektrodenpaare verbindende Linie mit dieser Diagonale einen indirekten Winkel bildet

8. Faser nach einem der vorhergehenden Ansprüche, wobei die Mäntel mit hohem Brechungsindex unterbrochen sind und Einsätze aus Glas mit niedrigem Brechungsindex enthalten

9. Faser nach einem der vorhergehenden Ansprüche, wobei das Glas des Bragg-Struktur-Kerns zusätzlich mindestens eine der folgenden Komponenten in Gew-% enthält. Er₂O₃, Yb₂O₃, Nd₂O₃, Y₂O₃ (0,0-3%), Tb₂O₃ (0,01-1,5%)

10. Faser nach einem der vorhergehenden Ansprüche, wobei leitfähige Elektroden aus Zinn gefertigt sind

11. Faser nach einem der vorhergehenden Ansprüche, wobei leitfähige Elektroden aus einer Zinn-Blei-Legierung gefertigt sind

12. Faser nach einem der vorhergehenden Ansprüche, wobei diese zwei Paare von leitfähigen Elektroden enthält, während Elektroden von jedem Paar an sich diametral gegenüberliegenden Seiten an die Bragg-Struktur angrenzen und Ebenen durch Mittelachsen von Elektroden von jedem Elektrodenpaar zusammen vorgestaltete Winkel bilden

13. Faser nach einem der vorhergehenden Ansprüche, wobei die Gläser einen Kerr-Koeffizienten von nicht weniger als 5 10⁻¹⁶ *m*/*V*² aufweisen

14. Verfahren zur Herstellung einer elektrooptischen Faser mit photonischem Kristall, umfassend: Herstellen von separaten Ausgangsstäben aus den Stangen, die aus einem Kern und Mantelgläsern gefertigt sind,Ziehen von Stäben mit gleichen Abmessungen und Formen aus diesen,Bündeln eines Pakets von Elementen einer Faser mit Elektroden aus den Stäben, Ziehen des Vorformlings aus dem Paket und Ziehen der Faser,**dadurch gekennzeichnet, dass** die Anfangsstäbe aus Stangen mit Kern und Mantel aus Glas mit niedrigem Brechungsindex und Stangen mit Mantel aus Glas mit hohem Brechungsindex gezogen werden, woraus ein oder mehrere Pakete mit hexagonalem Querschnitt gebündelt werden, wobei ein Mittelteil eine Bragg-Struktur bildet, in der Glasschichten mit niedrigem Brechungsindex und mit hohem Brechungsindex, die von den Stäben gebildet sind, abwechselnd an einen Glaskern mit niedrigem Brechungsindex angrenzen, und wobei ein Umfangsteil eine Hülle für die Bragg-Struktur bildet, wobei das Umfangsteil durch Stäbe gebildet wird, die aus Gläsern mit einer niedrigen Viskosität im Glaserweichungstemperaturbereich gefertigt sind, das gebündelte Paket gezogen wird, um einen Stab mit Bragg-Struktur zu bilden, Elektrodenstäbe aus mit Metall gefüllten Glasröhren gezogen werden, ein sekundäres Paket gebildet wird und aus einem oder mehreren Stäben mit Bragg-Struktur und einem oder mehreren Elektrodenpaaren entsprechend den vorgestalteten Parametern einer spezifischen Art des Bündels besteht, wobei sich die Stäbe mit der Bragg-Struktur in einem Mittelteil des sekundären Pakets befinden, das von einer oder mehreren Reihen von Stäben aus Glas mit einer niedrigen Viskosität im Temperaturbereich des Faserziehens umgeben ist, um eine weiche Hülle der Faser zu bilden, während die Elektroden nahe der Bragg-Struktur in sich diametral gegenüberliegenden Paaren angeordnet sind, das sekundäre Paket erneut gezogen wird, um einen Vorformling und dann schließlich eine elektrooptische Faser mit photonischem Kristall zu bilden

15. Verfahren nach Anspruch 14, wobei beim Vorgang des erneuten Ziehens durch eines der Elektrodenpaare eine elektrische Spannung von mehreren Zehntel Volt an das sekundäre Paket angelegt wird

## Revendications

1. Fibre électro-optique à cristaux photoniques incluant ses éléments constitutifs constitués de verres à composants multiples dans laquelle la fibre a
une partie centrale formant une structure de Bragg, la partie centrale comprenant un noyau (1) constitué de façon homogène d'un verre à faible indice de réfraction et d'un ensemble prédéterminé de revêtements alternés constitués de verres à indice de réfraction élevé (2) et à faible indice de réfraction (3) ;
une partie périphérique formant une enveloppe de la structure de Bragg, la partie périphérique étant formée à partir de verres à composants multiples avec une faible viscosité dans la plage de température d'étirement de la fibre ; et
des électrodes métalliques situées le long de l'axe de fibre, noyées dans la partie périphérique adjacente à la partie centrale sur des côtés diamétralement opposés, et
une enveloppe de protection extérieure en polymère dans laquelle les verres ont un coefficient de Kerr élevé

2. Fibre selon la revendication 1, dans laquelle les éléments de la structure de Bragg ont une section transversale prédéfinie

3. Fibre selon la revendication 1 ou 2, dans laquelle le noyau, les revêtements à faible indice de réfraction et les revêtements à indice de réfraction élevé sont constitués de verres contenant les composants (en % en poids) SiO₂ (7-25%), B₂O₃ (6-15%), La₂O₃ (14-30%), BaO (21-35%), TiO₂ (12-15%), ZrO₂ (1-6%), WO₃ (0,7-2%), Nb₂O₅ (2,5-11 %) et au moins un composant parmi le groupe As₂O₃, Sb₂O₃ dans des quantités de 0,1-0,5%

4. Fibre selon l'une quelconque des revendications 1 ou 2, dans laquelle les revêtements à indice de réfraction élevé sont constitués de verres contenant les composants (en % en poids) : SiO₂ (7-25%), B₂O₃ (6-15%), La₂O₃ (14-30%), BaO (21-35%), TiO₂ (12-15%), ZrO₂ (1-6%), WO₃ (0,7-2%), Nb₂O₅ (2,5-11%) et au moins un composant parmi le groupe As₂O₃, Sb₂O₃ dans des quantités de 0,1-0,5% ; et
le noyau et les revêtements à faible indice de réfraction sont constitués de verres contenant les composants suivants (en % en poids) : SiO₂ (50-75%), au moins un de composants parmi le groupe B₂O₃, Al₂O₃ dans des quantités de B₂O₃ (1-25%), Al₂O₃ (1-10%), au moins un de composants parmi le groupe K₂O, Na₂O, Li₂O dans des quantités de K₂O (1-12%), Na₂O (2-20%), Li₂O (1-5%), au moins un composant parmi le groupe BaO, CaO, MgO dans des quantités de (en % en poids) BaO, CaO (0,5-6%), MgO (0,5-4%) et au moins un composant parmi le groupe As₂O₃, Sb₂O₃ dans des quantités de 0,1-0,5% en poids

5. Fibre selon l'une quelconque des revendications 1 à 4, dans laquelle le noyau et/ou les revêtements contiennent en outre au moins un composant (en % en poids) : SrO, CaO (0,5-2%), Ta₂O₅ (2,5-11%).

6. Fibre selon l'une quelconque des revendications 1 à 5, dans laquelle le verre du revêtement extérieur à faible indice de réfraction de la structure de Bragg et/ou le verre du revêtement extérieur à indice de réfraction élevé de la structure de Bragg contiennent en outre au moins un composant parmi le groupe CoO, Cr₂O₃, Mn₂O₃ (en % en poids) CoO, Cr₂O₃ (0,1-0,5%), Mn₂O₃ (0,01-2%)

7. Fibre selon l'une quelconque des revendications 1 à 6, dans laquelle les revêtements de la structure de Bragg ont une section transversale perpendiculaire à l'axe de fibre sous la forme d'un hexagone allongé dans le sens de l'une des diagonales, tandis que les électrodes sont situées de telle façon que la ligne connectant les paires d'électrodes forme un angle indirect avec cette diagonale

8. Fibre selon l'une quelconque des revendications précédentes, dans laquelle les revêtements à indice de réfraction élevé sont discontinus et contiennent des insertions constituées de verre à faible indice de réfraction

9. Fibre selon l'une quelconque des revendications précédentes, dans laquelle le verre du noyau de la structure de Bragg contient en outre au moins un des composants suivants en % en poids Er₂O₃, Yb₂O₃, Nd₂O₃, Y₂O₃ (0,0-3%), Tb₂O₃ (0,01-1,5%)

10. Fibre selon l'une quelconque des revendications précédentes, dans laquelle les électrodes conductrices sont constituées d'étain

11. Fibre selon l'une quelconque des revendications précédentes, dans laquelle les électrodes conductrices sont constituées d'un alliage étain-plomb

12. Fibre selon l'une quelconque des revendications précédentes, dans laquelle elle contient deux paires d'électrodes conductrices tandis que les électrodes de chaque paire sont adjacentes à la structure de Bragg sur des côtés diamétralement opposés et des plans passant à travers des axes centraux d'électrodes de chaque paire d'électrodes forment un angle prédéterminé l'un avec l'autre

13. Fibre selon l'une quelconque des revendications précédentes, dans laquelle les verres ont un coefficient de Kerr non inférieur à 5-10⁻¹⁶ *m*/*V*²

14. Procédé de fabrication d'une fibre électro-optique à cristaux photoniques incluant :
la fabrication de tiges initiales séparées à partir des barres constituées de verres de noyau et de revêtement,
l'étirage à partir de celles-ci de tiges de dimensions et de forme égales,
la mise en faisceau d'un groupe d'éléments d'une fibre avec des électrodes à partir des tiges,
l'étirage de la préforme à partir du groupe et l'étirage de la fibre **caractérisé en ce que**
les tiges initiales sont étirées à partir de barres de noyau et de revêtement constituées d'un verre à faible indice de réfraction et de barres de revêtement constituées d'un verre à indice de réfraction élevé, à partir desquelles un ou plusieurs groupes de section hexagonale sont mis en faisceau, dans lequel une partie centrale forme une structure de Bragg dans laquelle des couches de verre à faible indice de réfraction et à indice de réfraction élevé formées par les tiges sont de façon alternée adjacentes à un noyau à faible indice de réfraction et dans lequel une partie périphérique forme une enveloppe pour la structure de Bragg, la partie périphérique étant formée par des tiges constituées de verres ayant une faible viscosité dans la plage de température de ramollissement du verre,
le groupe mis en faisceau est étiré pour former une tige avec une structure de Bragg,
des tiges d'électrodes sont étirées à partir de tubes en verre remplis de métal,
un groupe secondaire est formé et consiste en une ou plusieurs tiges avec une structure de Bragg et une ou plusieurs paires d'électrodes en conformité avec les paramètres prédéfinis du type spécifique du faisceau, dans lequel les tiges avec une structure de Bragg sont situées dans une partie centrale du groupe secondaire entouré par une ou plusieurs rangées de tiges constituées d'un verre ayant une faible viscosité dans la plage de température d'étirement de la fibre pour former une enveloppe molle de la fibre tandis que les électrodes à proximité de la structure de Bragg sont agencées en paires qui sont diamétralement opposées,
le groupe secondaire est à nouveau étiré pour former une préforme, et ensuite, finalement, une fibre électro-optique à cristaux photoniques

15. Procédé selon la revendication 14, dans lequel au moment du processus de nouvel étirage, une tension électrique de plusieurs dixièmes de volt est appliquée au groupe secondaire par l'intermédiaire de l'une des paires d'électrodes
